Europäisches Patentamt

European Patent Office

Office européen des brevets

(11) Numéro de publication: **0 159 595**
**A1**

## (12) DEMANDE DE BREVET EUROPEEN

(21) Numéro de dépôt: **85104071.7**

(22) Date de dépôt: **03.04.85**

(51) Int. Cl.⁴: **A 01 K 1/035**, A 01 K 23/00

(30) Priorité: **03.04.84  CH 1677/84**

(43) Date de publication de la demande: **30.10.85**
**Bulletin 85/44**

(84) Etats contractants désignés: **AT BE CH DE FR GB IT LI LU NL SE**

(71) Demandeur: **Giroud, Jean-Marie, 19, Route de Fully, CH-1920 Martigny (CH)**
Demandeur: **Pierroz, Jacques, 21, Rue d'Octodure, CH-1920 Martigny (CH)**

(72) Inventeur: **Pierroz, Jacques, Rue d'Octodure 21, CH-1920 Martigny (CH)**

(74) Mandataire: **Closuit, Jean-Marie, Place Centrale 9 b, CH-1920 Martigny (CH)**

(54) **WC public pour chiens.**

(57) Il s'agit d'un WC public pour chien utilisable en série, destiné à assainir les voies publiques et à simplifier le travail des voiries, constitué par un caisson (1) avec accès (3) à un tapis roulant (2) qui évacue les excréments et urines, reposant sur une plaque (20) avec chassis (19). La mise en marche du tapis se fait soit par interrupteur (4) avec coffret électrique (5) qui actionne un moteur (7) entraînant deux tambours (10) (17) par courroie ouchaîne (9), soit par automatisme. Le tapis roulant amène la matière fécale dans une solution chimique (11) qui la digère. Le tapis est nettoyé par deux racloirs (13) tendus par balancier (21) ou extenseurs à l'intérieur de la cuve (8) et par une bavette de sécurité (16) à la sortie du liquide. Tout le système peut être soulevé au moyen d'une poignée (12) pour nettoyage et changement du liquide qui s'évacue par une bouche avec vanne (15) ou pour le trop-plein par une bouche supérieure (14) toutes deux reliées à l'égoût. Le moteur et la plaque électrique sont protégés par une plaque amovible (6). Le tapis est tendu en permanence par un extenseur (18).

0159595

## WC PUBLIC POUR CHIENS

La présente invention a pour objet un caisson
contenant un système d'élimination des excréments
et urines de chiens.

On ne connaît pas d'appareils similaires .
C'est en cela que réside la nouveauté. Cette invention est utilisable industriellement.Son utilité pratique est évidente. Ces caissons sont
placés en divers points de la ville et les propriétaires ou détenteurs de chiens peuvent y conduire régulièrement leur animal. Cette possibilité
pourra être transformée en obligation prévue par
la législation communale. On sait en effet que
les excréments de chien sont une plaie pour tous
les services de voiries. Leur travail s'en trouvera simplifié et l'utilisation d'un tel appareil
constitue un assainissement important des voies
publiques. Les chiens, que les propriétaires
doivent aujourd'hui tenir en laisse, cesseront
ainsi d'être une cause de désagréments.
L'appareil est composé d'un caisson en matière
préfabriquée (1) à l'intérieur duquel se trouve
un tapis roulant (2) avec support (20) et chassis
(19) comportant un tambour entraîneur (10) et un
tambour libre (17), le premier relié par une chaîne ou courroie (9) à un moteur d'entraînement
(7) situé dans une armoire avec paroi amovible (6)
et commandé par un interrupteur de mise en service
(4) relié à un coffret électrique(5). Le moteur
peut également être mis en marche par automatisme.

Le chien accède au tapis par un seuil d'entrée (3), y dépose ses excréments et urines. Le tapis roulant est actionné par le propriétaire et entraîne son contenu dans une cuve (8) au fond du caisson qui contient une solution chimique (11) qui le digère. Le nettoyage du tapis est assuré dans le liquide par deux racloirs(13) dont la pression est produite par des balanciers (21), ou pourra l'être par des extenseurs, et à la sortie du liquide par une bavette (16). Le tapis est en permanence tendu par un extenseur (18). Tout le mécanisme du tapis peut être levé au moyen d'une poignée (12) pour son nettoyage et le changement du liquide qui est évacué par une bouche avec vanne (15) reliée à l'égoût. L'élimination du trop-plein éventuel est assurée par un tuyau (14) situé sous la plaque de support du tapis (20) et également ment relié à l'égoût.

0159595

D E S S I N   1 (PLAN)

1. Caisson préfabriqué

2. Tapis roulant d'évacuation des excréments

3. Seuil d'entrée

4. Interrupteur de mise en service du tapis

5. Coffret électrique

6. Paroi amovible protégeant partie technique

7. Moteur d'entraînement du tapis

## D E S S I N  II (élévation)

1. Caisson préfabriquée

3. Seuil d'entrée

4. Interrupteur de mise en service du tapis

8. Cuve en matière préfabriquée

## D E S S I N  III (Coupe longitudinale)

1. Caisson préfabriqué

2. Tapis roulant d'évacuation des excréments

6. Paroi amovible de protection

7. Moteur d'entraînement du tapis

9. Chaîne ou courroie d'entraînement

10. Tambour entraîneur

11. Solution liquide digestrice des excréments

12. Poignée de levage du chassis

13. Racleur

14. Bouche d'évacuation du trop-plein

15. Bouche d'évacuation complète avec vanne

16. Bavette

17. Tambour libre

18. Extenseur du tapis

19. Chassis

20. Plaque-support du tapis

21. Balancier pour racleur

—1—

# R E V E N D I C A T I C A T I O N

WC public pour chiens consistant en un caisson
accessible à l'animal fixé au trottoir en divers
endroits de la cité, et contenant un tapis destiné
à recevoir les excréments et urines dont l'évacuation
est assurée par un système roulant actionné par le
détenteur du chien ou automatiquement.
L'appareil est nouveau en soi et est caractérisé par
la digestion rapide des matières fécales, assurée par
une solution chimique se trouvant au fonds de la cuve.
Le système du tapis roulant est amovible pour permettre
son nettoyage, et la solution chimique est reliée à
l'égoût par une vanne et peut donc être changée périodiquement.

2

0159595

0159595

Office européen
des brevets

**RAPPORT DE RECHERCHE EUROPEENNE**

0159595
Numéro de la demande

EP 85 10 4071

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 793 988 (R.S. TRAEGER) <br> * Document complet * | 1 | A 01 K 1/035 <br> A 01 K 23/00 |
| A | FR-A-2 277 528 (L.L. POLYA) <br> * Page 1, lignes 1-4 * | 1 | |
| A | US-A-4 050 414 (W.L. KNOCHEL et al.) <br> * Document complet * | 1 | |
| A | DE-C-1 190 408 (SOCIETE CIVILE D'ETUDES ET DU REALISATIONS) <br> * Colonne 4, lignes 16,17,57 * | 1 | |
| A | DE-C- 685 809 (AUSTRAL CABINET CO., LTD.) <br> * Page 1, lignes 5-7 * | 1 | DOMAINES TECHNIQUES RECHERCHES (Int. Cl.4) <br><br> A 01 K 1/00 <br> A 01 K 23/00 <br> A 47 K 11/00 |

Le présent rapport de recherche a été établi pour toutes les revendications

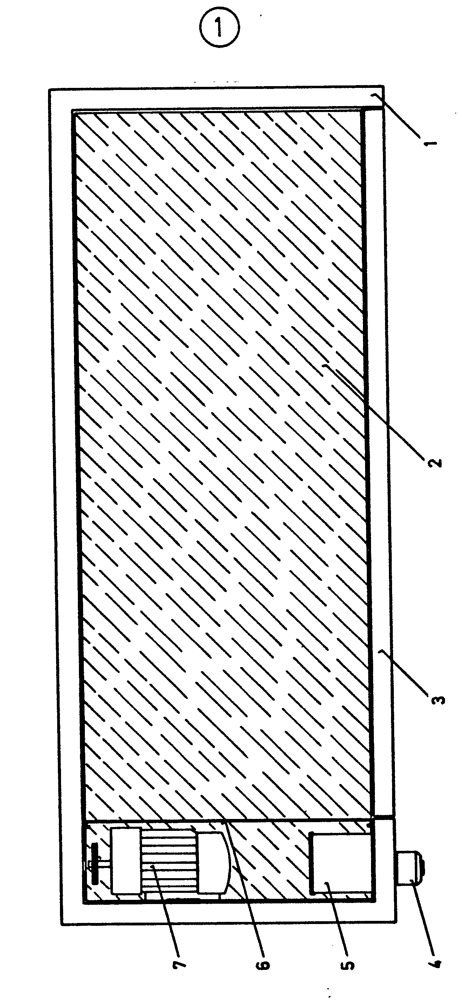

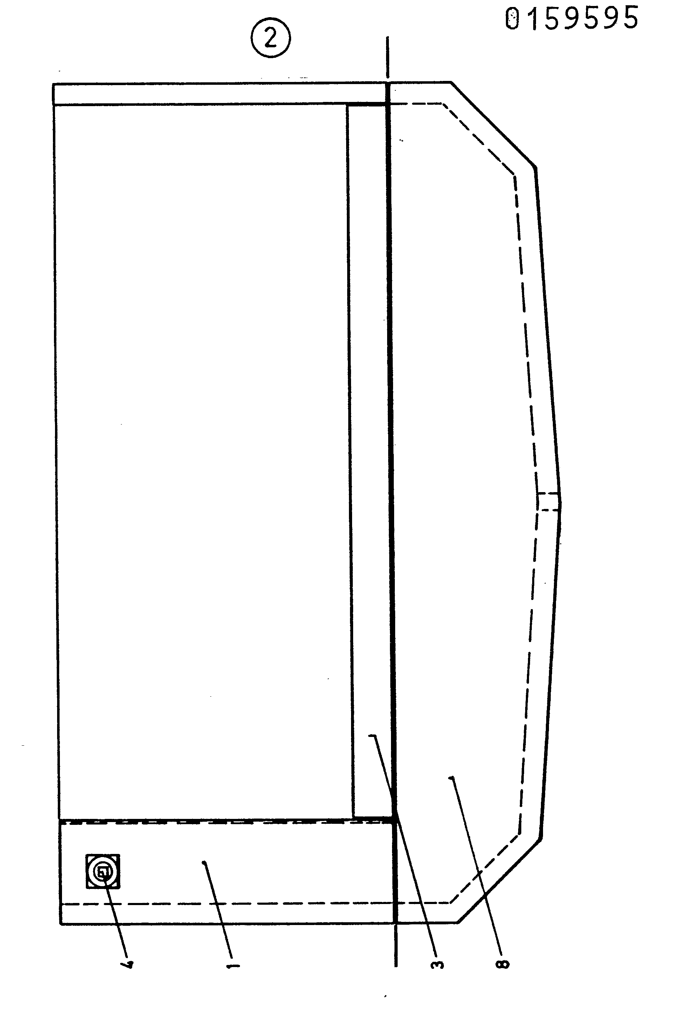

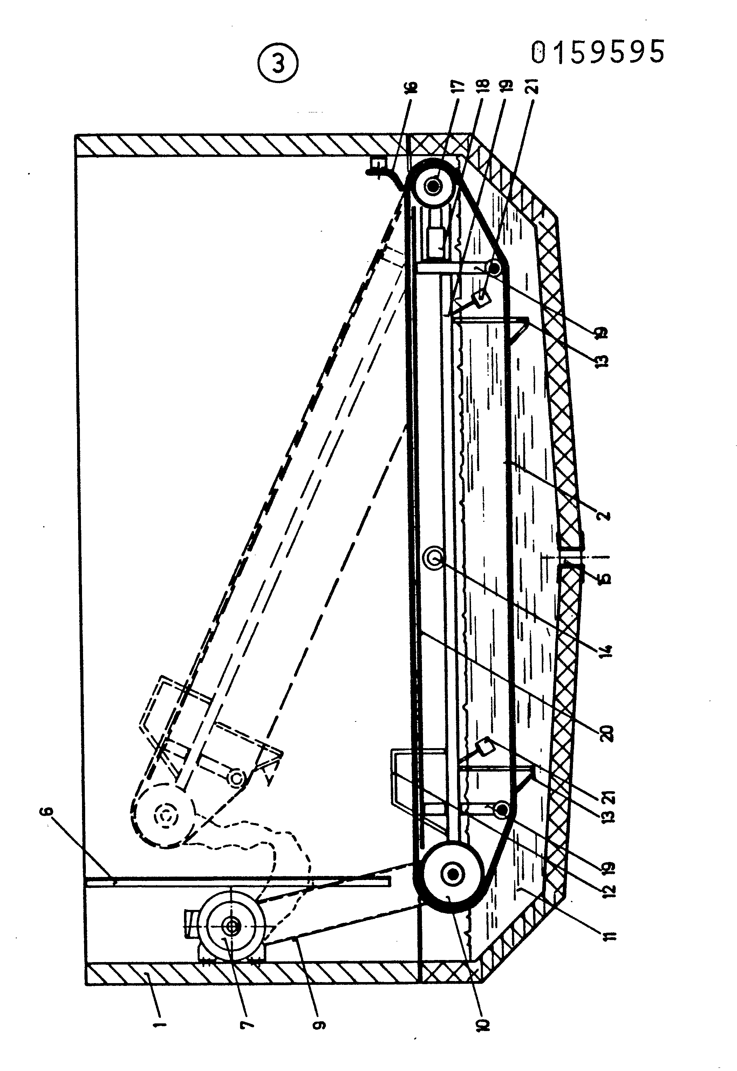

| Lieu de la recherche | Date d'achèvement de la recherche | Examinateur |
|---|---|---|
| BERLIN | 27-06-1985 | WUNDERLICH J E |